# EUROPÄISCHE PATENTSCHRIFT

(11) **EP 0 685 656 B1**
(45) Veröffentlichungstag und Bekanntmachung des Hinweises auf die Patenterteilung: **08.04.1998**
(21) Anmeldenummer: 95104184.7
(22) Anmeldetag: 21.03.1995
(51) Int. Cl.: F16B 13/08

(54) **Befestigungselement**
Fastening element
Elément de fixation

(30) Priorität: 01.06.1994 DE 4419149
(43) Veröffentlichungstag der Anmeldung: 06.12.1995
(73) Patentinhaber: fischerwerke Artur Fischer GmbH & Co. KG, D-72178 Waldachtal (DE)
(72) Erfinder: Fischer, Artur, Prof.Dr., D-72178 Waldachtal (DE)

(56) Entgegenhaltungen:
- DE-A- 2 914 739
- DE-A- 3 820 759
- FR-A- 2 552 502

## Beschreibung

Die Erfindung betrifft ein Befestigungselement gemäß der Gattung des Anspruches 1.

Aus der DE-OS 37 12 213 ist ein Befestigungselement bekannt, das aus einem Ankerbolzen, einer Spreizhülse und einem in die Spreizhülse einziehbaren Spreizkörper besteht. Der Spreizkörper ist dabei als Spreizkonus ausgebildet. Die Spreizhülse besitzt von ihrer dem Spreizkonus zugewandten Stirnseite ausgehende Längsschlitze, die beim Einziehen des Spreizkörpers ein Aufspreizen der Spreizhülse ermöglichen. Am anderen Ende ist zur Befestigung eines Gegenstandes an einem Bauteil ein Innengewinde vorgesehen, in das eine Befestigungsschraube einschraubbar ist.

Damit die Spreizhülse beim Festziehen der Befestigungsschraube aufgespreizt werden kann, ist es erforderlich, daß der Spreizkonus in die Spreizhülse hineingezogen wird. Dies ist jedoch nur dann möglich, wenn die Stirnseite des Ankerbolzens einen ausreichend großen Abstand zum Befestigungsgegenstand aufweist. Nur in diesem Fall ist es möglich, das Befestigungselement in Richtung Wandoberfläche zu ziehen, wobei der Konus in die ortsfest im Bohrloch gelagerte Spreizhülse eindringen kann, um eine Aufspreizung zu bewirken.

Zu diesem Zweck ist in der DE-OS 37 12 213 ein Distanzelement vorgesehen, das in das Innengewinde eingesetzt wird. Beim Einschlagen des Befestigungselementes in das Bauteil bestimmt das Distanzelement den Abstand der Stirnseite des Ankerbolzens zur Wandoberfläche. Nach dem Herausnehmen des Distanzelementes aus dem Innengewinde kann nunmehr die Befestigungsschraube durch den zu befestigenden Gegegenstand hindurch in das Innengewinde des Ankerbolzens eingedreht werden. Der vorhandene Abstand zwischen der Stirnseite des Ankerbolzens und der Unterseite des zu befestigenden Gegenstandes ermöglicht es nunmehr, den Ankerbolzen und damit den Spreizkonus in Richtung Wandoberfläche zu ziehen, so daß die ortsfest im Bohrloch sitzende Spreizhülse von dem Spreizkörper aufgespreizt wird. Gleichzeitig erfolgt als Reaktionskraft die Verspannung des zu befestigenden Gegenstandes, die bei entsprechend großem Abstand auch die Überbrückung einer Hohllage zwischen der Wandoberfläche und dem zu befestigenden Gegenstand ermöglicht.

Mit dem Distanzelement ist bei der bekannten Lösung ein separates Teil erforderlich, das nach dem Setzen des Befestigungselementes in einem zusätzlichen Arbeitsgang entfernt werden muß. Das Distanzelement schließt auch eine Vormontage der Befestigungsschraube und damit eine einfache Durchsteckmontage, bei der das Befestigungselement durch den zu befestigenden Gegenstand hindurch in das Mauerwerk eingesetzt wird, aus.

Aus der FR-A- 2 552 502 ist ein Befestigungselement mit einem Dübelkörper bekannt, der an seinem hinteren Ende ein Innengewinde für die Aufnahme einer Befestigungsschraube und an seinem vorderen Ende einen Verankerungsbereich aufweist. Der Verankerungsbereich ist durch einen in Längsrichtung verlaufenden tangentialen Einschnitt des Dübelkörpers mit einer zum vorderen Ende des Dübelkörpers ansteigenden Schrägfläche gebildet. Durch einen weiteren quer zu dem tangentialen Einschnitt und an dessen Ende eingebrachten Einschnitt entsteht ein über eine Sollbruchstelle mit dem Dübelkörper verbundenes Spreizelement, das mittels eines Einschlagwerkzeuges vom Dübelkörper abtrennbar ist. Zum Verankern wird das Befestigungselement in eine mindestens der Länge des Befestigungselementes entsprechenden Sackbohrung in der Weise eingesetzt, das das Befestigungselement auf dem Grund der Sackbohrung aufsitzt. Mit einem auf die hintere Stirnfläche des Spreizelementes auftreffenden Einschlagwerkzeug wird das Spreizelement an der Sollbruchstelle abgerissen und durch axiale Verschiebung des Spreizelementes in Richtung Bohrlochgrund das Befestigungselement im Bohrloch verankert. In das Innengewinde des im Bohrloch fest verankerten Befestigungselementes wird zur Verspannung eines Gegenstandes an der Mauerwerksaußenfläche eine Befestigungsschraube eingedreht.

Abgesehen davon, daß für die Erstellung der exakten Tiefe der Sackbohrung Spezialwerkzeuge erforderlich sind, ist eine Verankerung des bekannten Befestigungselementes nur in harten und dickwandigen Vollbaustoffen möglich, bei denen eine ausreichende Abstützung am Bohrlochgrund des Dübelkörpers gewährleistet ist. Da ferner das Spreizelement und der Dübelkörper aus dem gleichen Material bestehen, ergeben sich ungünstige, ein Nachspreizen ausschließende Gleitverhältnisse.

Das aus der DE-A-2 914 739 bekannte Befestigungselement besitzt einen Verankerungsbereich, der durch eine in Längsrichtung verlaufende Nut mit einem zum vorderen Ende des Ankerbolzens ansteigenden Nutgrund und einem in der Nut eingesetzten Keilelement gebildet ist, das auf dem Nutgrund in Richtung zum vorderen Ende verschiebbar aufliegt und dessen Oberkante mit den Schaft überragenden Zähnen versehen ist. Das Befestigungselement weist einen mit einem Außengewinde versehenen Ankerbolzen auf. Zum Befestigen eines Gegenstandes wird der Ankerbolzen in Durchsteckmontage durch den zu befestigenden Gegenstand hindurch in das Bohrloch im Mauerwerk eingesetzt. Mit der auf dem Außengewinde des Ankerbolzens aufgedrehten Mutter wird der Ankerbolzen gegenüber dem sich im Bohrloch verkeilenden Spreizelement axial in Richtung Bohrlochmündung verschoben, sodaß durch den ansteigenden Nutgrund die Verkeilung des Spreizelementes verstärkt wird. Nach der Befestigung überragt der Ankerbolzen die Mutter und den zu befestigenden Gegenstand um den Weg der axialen Verschiebung. Eine solche Befestigung ist daher für viele Anwendungen nicht akzeptabel.

Aus der DE-A-3 820 759 ist ein Befestigungselement bekannt, das in einem hinterschnittenen Bohrloch verankert wird. Zur Verankerung wird das Befestigungselement soweit in das Bohrloch eingeschoben, bis die Stirnseite des Gewindebolzens am Bohrlochgrund aufsitzt. Durch Auftreiben einer über den Gewindebolzen gestülpten Spreizhülse auf den am Bohrlochgrund aufsitzenden Spreizkonus des Gewindebolzens wird das Befestigungselement im Bohrloch formschlüssig verankert. Nach der Verankerung muß die Dübelhülse bündig mit der Außenfläche des Mauerwerks abschließen, um einen Gegenstand gegen die Mauerwerksaußenfläche durch Aufdrehen einer Mutter auf den Gewindebolzen verspannen zu können. Auch dieses bekannte Befestigungselement bietet keine Möglichkeit für eine bündige Montage und Befestigung eines Gegenstandes mit einer handelsüblichen Befestigungsschraube.

Der Erfindung liegt die Aufgabe zugrunde, ein Befestigungselement mit einem Innengewinde zum Eindrehen einer handelsüblichen Befestigungsschraube zu schaffen, das in Durchsteckmontage sehr einfach montierbar ist, und mit dem ein Gegenstand an einem Bauteil befestigbar und selbst bei Hohllagen fest verspannbar ist.

Die Lösung dieser Aufgabe wird durch die im Anspruch 1 angegebenen Merkmale erreicht.

Durch einen Verankerungsbereich, der durch eine in Längsrichtung verlaufende Nut mit einem zum vorderen Ende des Ankerbolzens ansteigenden Nutgrund und einem in der Nut eingesetzten Keilelement gebildet ist, dessen Oberkante mit den Schaft überragenden Zähnen versehen ist, wird bereits beim Eintreiben des Befestigungselementes in das vorbereitete Bohrloch eines Bauteiles eine Verkeilung des Befestigungselementes im Bohrloch erreicht, die keine bzw. nur eine geringe axiale Verschiebung zwischen dem Ankerbolzen und dem Keilelelment für eine ordnungsgemäße Verankerung erforderlicht macht. Das erfindungsgemäße Befestigungselement wird mit der vormontierten Befestigungsschraube durch den zu befestigenden Gegenstand hindurch in das Bohrloch im Bauteil soweit eingetrieben, bis der Kopf der Befestigungsschraube bzw. die unter dem Kopf angeordnete Unterlagscheibe am Befestigungsgegenstand aufsitzt. Durch die in einem definierten Abstand zur Stirnseite des Ankerbolzens vormontierte und in dieser Stellung fixierte Befestigungsschraube sitzt die Stirnseite des Ankerbolzens unterhalb der Außenfläche des Befestigungsgegenstandes. Mit einem Werkzeug wird die Befestigungsschraube eingedreht und dabei die den Abstand zwischen Schraube und Ankerbolzen fixierende Sperre gelöst. Das Lösen der Sperre erfordert ein erhöhtes Drehmoment, das durch den speziellen, ein Mitdrehen des Ankerbolzens ausschließenden Verankerungsbereich aufgebracht werden kann. Nach dem Überwinden des Sperre wird über die Befestigungsschraube eine Zugspannung erzeugt, die einerseits den Verankerungsbereich durch geringfügige axiale Verschiebung noch stärker im Bohrloch verkeilt und andererseits eine Verspannung des zu befestigenden Gegenstandes auch bei Vorliegen einer Hohllage durch eine unebene Mauerwerksoberfläche ermöglicht. Als Abstandsmaß zwischen dem Schraubenkopf und der Stirnseite des Ankerbolzens hat sich eine Distanz von mindestens 3 mm bei kleineren Durchmessern und maximal 7 mm bei größeren Durchmessern als zweckmäßig erwiesen.

Die Fixierung des Abstands der Befestigungsschraube im Innengewinde kann entweder durch eine abscherbare Prägenase, die am Innengewinde oder am Gewinde der Befestigungsschraube angebracht ist, erfolgen oder durch einen zwischen dem Innengewinde und der Befestigungsschraube angebrachten Klebepunkt. Die Verbindung muß so fest sein, daß eine unbeabsichtigte Verstellung des Abstandes ohne Werkzeug nicht eintreten kann.

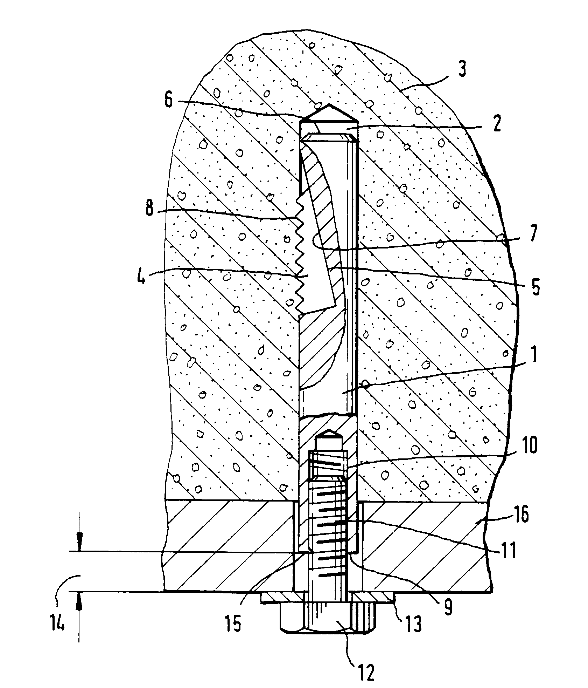

Die Erfindung wird nachfolgend anhand der Zeichnung näher erläutert, die das in einem Bauteil eingesetzte Befestigungselement zeigt.

Das in der Zeichnung dargestellte Befestigungselement besteht aus dem Ankerbolzen 1, der zur Verankerung in einem Bohrloch 2 eines Bauteils 3 einen durch ein Keilelement 4 gebildeten Verankerungsbereich aufweist. Das Keilelement 4 ist in einer in Längsrichtung des Ankerbolzens 1 verlaufenden Nut 5 eingesetzt, die mit einem zum vorderen Ende 6 des Ankerbolzens ansteigenden Nutgrund 7 versehen ist. Die mit Zähnen 8 versehene Oberkante des Keilelements 4 überragt den Schaft des Ankerbolzens 1, so daß nach dem Eintreiben des Befestigungselementes in das Bohrloch 2 eine Verkeilung des Keilelements 4 mit der Wandung des Bohrloches 2 eintritt.

Am hinteren Ende 9 des Ankerbolzens 1 ist ein Innengewinde 10 eingebracht, in das eine Befestigungsschraube 11 mit Kopf 12 und Unterlagscheibe 13 vormontiert ist. Die Schraube 11 ist im Innengewinde 10 soweit eingedreht und in dieser Stellung fixiert, daß zwischen dem Kopf 12 der Befestigungsschraube 11 bzw. der Unterlagscheibe 13 und der Stirnseite des Ankerbolzens 9 ein vorbestimmter Abstand 14 entsteht. Zweckmäßigerweise beträgt dieser Abstand zwischen 3 mm als Mindestmaß und 7 mm als Höchstmaß. Im dargestellten Ausführungsbeispiel ist diese Fixierung der Schraube 11 durch eine Prägenase 15 erreicht, die eine Eindrehsperre für die Befestigungsschraube 11 bildet. Beim Drehen der Befestigungsschraube 11 mit einem Schraubenschlüssel wird die Prägenase 15 abgeschert und die Eindrehsperre überwunden. Durch weiteres Eindrehen der Schraube 11 wird zum einen durch axiale Verschiebung zwischen dem Ankerbolzen 1 und dem Keilelement 4 eine zusätzliche Verkeilung und als Reaktionskraft eine Verspannung des zu befestigenden Gegenstandes 16 am Bauteil 3 erreicht. Statt einer Prägenase am Innengewinde oder Gewinde der Befestigungsschraube ist es auch möglich, die Fixierung der Schraube im Innengewinde durch einen Klebepunkt zu erreichen.

## Patentansprüche

1. Befestigungselement für den Einsatz in Bohrlöcher eines Bauteils mit einem Ankerbolzen (1), der an seinem hinteren Ende (9) ein Innengewinde (10) für die Aufnahme einer Befestigungsschraube (11) und an seinem vorderen Ende einen Verankerungsbereich aufweist, wobei der Verankerungsbereich durch eine in Längsrichtung verlaufende Nut (5) mit einem zum vorderen Ende (6) des Ankerbolzens (1) ansteigenden Nutgrund (7) und einem in der Nut (5) eingesetzten Keilelement (4) gebildet ist, das auf dem Nutgrund (7) in Richtung zum vorderen Ende (6) verschiebbar aufliegt und dessen Oberkante mit den Schaft überragenden Zähnen (8) versehen ist, und daß die Befestigungsschraube (11) im Innengewinde (10) des Ankerbolzens (1) in der Weise vormontiert und durch eine überwindbare Sperre (15) fixiert ist, daß ein definierter Abstand (14) des Schraubenkopfes (12) zur Stirnseite (9) des Ankerbolzens (1) entsteht.

2. Befestigungselement nach Anspruch 1, **dadurch gekennzeichnet,** daß die Fixierung der Befestigungsschraube (11) im Innengewinde (10) durch eine abscherbare Prägenase (15) am Innengewinde (10) oder Gewinde der Befestigungsschraube (11) erfolgt.

3. Befestigungselement nach Anspruch 1, **dadurch gekennzeichnet,** daß die Fixierung der Befestigungsschraube (11) durch eine abscherbare Klebeverbindung zwischen dem Innengewinde (10) und der Befestigungsschraube (11) erfolgt.

## Claims

1. A fixing element for insertion in holes drilled in a building component, having an anchor bolt (1) which at its rear end (9) has an internal thread (10) for receiving a fixing screw (11) and at its leading end has an anchoring region, wherein the anchoring region is formed by a groove (5) running in the longitudinal direction and having a groove base (7) sloping up towards the leading end (6) of the anchor bolt (1) and by a wedge element (4) inserted in the groove (5), which wedge element lies on the groove base (7) so as to be displaceable towards the leading end (6) and the upper edge of which wedge element is provided with teeth (8) projecting beyond the shank, and the fixing screw (11) is pre-mounted in the internal thread (10) of the anchor bolt (1) in such a manner, and is fixed by a breakable barrier (15), that there is a defined distance (14) between the screw head (12) and the end face (9) of the anchor bolt (1).

2. A fixing element according to claim 1, characterized in that fixing of the fixing screw (11) in the internal thread (10) is effected by a shear-off stamped projection (15) on the internal thread (10) or on the thread of the fixing screw (11).

3. A fixing element according to claim 1, characterized in that fixing of the fixing screw (11) is effected by a shear-off adhesive connection between the internal thread (10) and the fixing screw (11).

## Revendications

1. Élément de fixation, pour l'insertion dans des trous borgnes d'un élément de construction, comportant une tige d'ancrage (1) qui présente, à son extrémité arrière (9), un filetage intérieur (10) pour recevoir une vis de fixation (11) et, à son extrémité avant, une zone d'ancrage, dans lequel la zone d'ancrage est formée par une rainure (5), orientée selon la direction longitudinale, avec un fond de rainure (7) qui va en montant en direction de l'extrémité avant (6) de la tige d'ancrage (1) et avec un élément en forme de coin (4) qui est inséré dans la rainure (5), qui repose sur le fond de la rainure (7) avec liberté de coulissement en direction de l'extrémité avant (6) et dont l'arête supérieure est munie de dents (8) qui dépassent du fût, et dans lequel la vis de fixation (11) est prémontée dans le filetage intérieur (10) de la tige d'ancrage (1), est fixée par un verrouillage (15) qui peut se surmonter, de façon qu'il y ait une distance définie (14) entre la tête de vis (12) et la face frontale (9) de la tige d'ancrage (1).

2. Élément de fixation selon la revendication 1, caractérisé par le fait que la fixation de la vis de fixation (11) dans le filetage intérieur (10) se fait au moyen d'un talon de sertissage (15), pouvant se cisailler, sur le filetage intérieur (10) ou sur le filetage de la vis de fixation (11).

3. Élément de fixation selon la revendication 1, caractérisé par le fait que la fixation de la vis de fixation (11) se fait au moyen d'une liaison par collage, pouvant se cisailler, entre le filetage intérieur (10) et la vis de fixation (11).
